# EUROPEAN PATENT APPLICATION

(11) **EP 4 811 604 A1**
(43) Date of publication of application: **23.09.2026**
(21) Application number: 24907772.8
(22) Date of filing: 05.11.2024
(51) Int. Cl.: H02J 50/10, H02J 50/90, H02J 50/00, H01F 27/30, H01F 38/14

(54) **ELECTRONIC DEVICE COMPRISING COIL**

(30) Priority: 22.12.2023 KR 20230189955; 18.06.2024 KR 20240079217
(71) Applicant: Samsung Electronics Co., Ltd., Suwon-si, Gyeonggi-do 16677 (KR)
(72) Inventor: KIM, Jedok, Suwon-si, Gyeonggi-do 16677 (KR); KIM, Yusu, Suwon-si, Gyeonggi-do 16677 (KR); PARK, Bumjin, Suwon-si, Gyeonggi-do 16677 (KR); PARK, Jaeseok, Suwon-si, Gyeonggi-do 16677 (KR); PARK, Jaehyun, Suwon-si, Gyeonggi-do 16677 (KR); YEO, Sungku, Suwon-si, Gyeonggi-do 16677 (KR)
(74) Representative: HGF
(86) International application number: PCT/KR2024/017316
(87) International publication number: WO 2025/135487

(57) **Abstract**

An electronic device according to various embodiments of the present invention comprises: a circuit board; and a first coil and a second coil which are formed on the circuit board. The first coil includes a plurality of first windings, and the second coil includes a plurality of second windings substantially surrounded by an innermost winding among the plurality of first windings of the first coil and configured to provide power to an external electronic device, wherein the inductance of the second coil may be configured to be greater than the inductance of the first coil.

## Description

### [Technical Field]

Various embodiments of the disclosure provide an electronic device including at least one coil.

### [Background Art]

The use of electronic devices, such as mobile terminals (e.g., smartphones) and wearable devices (e.g., watches), is steadily increasing, and a wide variety of functions are being provided on these devices.

An electronic device may include a battery to supply power required to perform various functions. The electronic device may charge the battery through a wired charging method or a wireless charging method.

For example, in the case of the wireless charging method, when an electronic device is placed on a wireless charging device, the battery of the electronic device may be charged by supplying power from a power transmission coil disposed inside the wireless charging device to a power reception coil disposed inside the electronic device.

In the case of the wireless charging method, when an external electronic device (e.g., a wearable device) is placed on the electronic device, power may be supplied to the power reception coil disposed inside the external electronic device through the power transmission coil disposed inside the electronic device.

The above-described information may be provided as a related art to help understanding of the disclosure. No claim or determination is made as to the applicability of any of the foregoing as prior art with respect to the disclosure.

### [Disclosure of Invention]

### [Technical Problem]

The method for wirelessly charging an electronic device or an external electronic device may include an electromagnetic induction method using a coil, a resonance method using resonance, or a radio wave radiation method that converts and electrical energy into microwaves and transmits the microwaves.

For example, in the electromagnetic induction method, a magnetic field induced through a coil may be used to wirelessly transfer power of a wireless charging device (e.g., a wireless charging transmitter) to an electronic device (e.g., a wireless charging receiver), thereby charging a battery included in the electronic device.

The electronic device may include at least one coil and may provide a wireless charging power to an external electronic device (e.g., a wearable device such as a watch or wireless earphones) by using the electromagnetic induction method.

For example, in case that the electronic device includes a coil in which two or more wires (e.g., conductive wires) are wound in a helical shape in order to provide wireless charging power to an external electronic device, the length of the inner wire and the length of the outer wire may differ. For example, when a current flows through coils where the lengths of the inner wire and the outer wire are different, an impedance difference occurs in the inner wire and the outer wire, which may result in a high current density in the coil or a non-uniform distribution of current density.

For example, when the high current density is formed in the coil or for providing wireless charging power to current density is unevenly distributed in a coil used by the electronic device to provide wireless charging power to an external electronic device, the coil may generate excessive heat, and the wireless charging efficiency may decrease.

Various embodiments of the disclosure may provide an electronic device that allows a uniform current density to be distributed in a coil for providing wireless charging power to an external electronic device.

The technical problems solved by the disclosure are not limited to the above technical problems and those skilled in the art will more clearly understand other technical problems from the following description.

### [Solution to Problem]

An electronic device according to an embodiment of the disclosure may include a circuit board, and a first coil and a second coil disposed on the circuit board. According to an embodiment, the first coil may include multiple first windings. According to an embodiment, the second coil may include multiple second windings that are substantially surrounded by the innermost winding of the multiple first windings of the first coil and configured to provide power to an external electronic device. According to an embodiment, the second coil may be configured to have an inductance greater than that of the first coil.

An electronic device according to an embodiment of the disclosure may include a circuit board, a first coil including multiple windings disposed on the circuit board, and a second coil that is substantially surrounded by an innermost winding of the first coil, and includes a 2-1st winding disposed in a first layer of the circuit board and a 2-2nd winding disposed in a second layer of the circuit board overlapping the first layer. According to an embodiment, the 2-1st winding may include a first sub-line and a second sub-line, and the first sub-line of the 2-1st winding may be disposed outside the second sub-line. According to an embodiment, the 2-2nd winding may include a first sub-line and a second sub-line, and the first sub-line of the 2-2nd winding may be disposed inside the second sub-line. According to an embodiment, at least one intersection region may be positioned in an innermost winding of the 2-1st winding and the 2-2nd winding. According to an embodiment, in the intersection region, the first sub-line of the 2-1st winding and the first sub-line of the 2-2nd winding may be connected, and the second sub-line of the 2-1st winding and the second sub-line of the 2-2nd winding may be connected.

### [Advantageous Effects of Invention]

According to various embodiments of the disclosure, ensuring a uniform current density distribution in a coil of an electronic device for providing wireless charging power to an external electronic device, it is possible to reduce heat generation in the coil and enhance wireless charging efficiency.

In addition, various effects directly or indirectly identified through the disclosure may be provided.

### [Brief Description of Drawings]

In connection with the description of the drawings, like or similar reference numerals may be used for like or similar elements.
FIG. 1 is a block diagram illustrating an electronic device in a network environment according to various embodiments of the disclosure.
FIG. 2 is a block diagram of a power circuit and a battery in an electronic device for receiving and/or transmitting power from/to the outside of the electronic device according to an embodiment of the disclosure.
FIG. 3A is a perspective view of a front surface of an electronic device according to various embodiments of the disclosure.
FIG. 3B is a perspective view of a rear surface of an electronic device according to various embodiments of the disclosure.
FIG. 4 is an exploded perspective view of an electronic device according to various embodiments of the disclosure.
FIG. 5 is a schematic diagram illustrating a first coil, a second coil, and a circuit board included in an electronic device according to an embodiment of the disclosure.
FIG. 6 is a schematic diagram illustrating the first coil shown in FIG. 5 according to an embodiment of the disclosure.
FIG. 7 is a schematic diagram illustrating a first coil, in which a single wire is wound in a spiral shape, according to an embodiment of the disclosure.
FIG. 8 is a schematic diagram illustrating a first coil, in which three wires are wound in a spiral shape, according to an embodiment of the disclosure.
FIG. 9 is a schematic diagram illustrating a configuration of a second coil according to an embodiment of the disclosure.
FIG. 10 is a schematic diagram illustrating a second 2-1st winding of a second coil disposed in a first layer of a circuit board according to an embodiment of the disclosure.
FIG. 11 is a schematic diagram illustrating a second 2-2nd winding of a second coil disposed in a second layer of a circuit board according to an embodiment of the disclosure.
FIG. 12 is a schematic diagram illustrating a configuration in which a 2-1st winding and a 2-2nd winding of a second coil are connected to each other in an intersection region according to an embodiment of the disclosure.
FIG. 13 is a schematic diagram illustrating a configuration in which a 2-1st winding and a 2-2nd winding of a second coil are connected through at least one via according to an embodiment of the disclosure.
FIG. 14 is a schematic diagram illustrating a current distribution of a second coil according to an embodiment of the disclosure.
FIG. 15 is a schematic diagram illustrating a configuration of a second coil according to various embodiments of the disclosure.
FIG. 16 is a schematic diagram illustrating a 2-1st winding of a second coil disposed in a first layer of a circuit board and a 2-2nd winding of the second coil disposed in a second layer of the circuit board according to various embodiments of the disclosure.
FIG. 17 is a schematic diagram illustrating a current distribution of a second coil according to various embodiments of the disclosure.

### [Mode for the Invention]

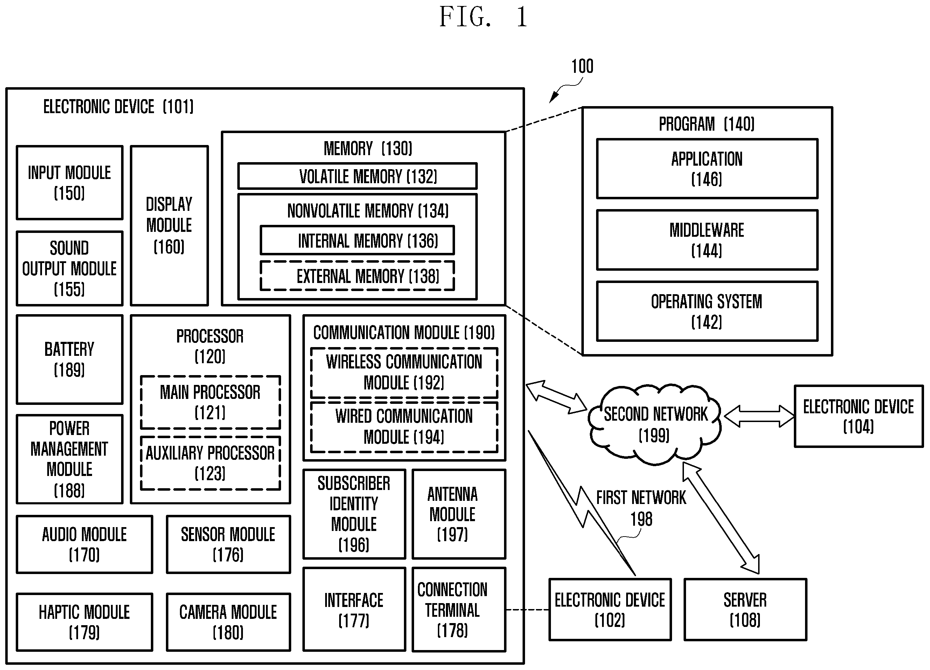

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

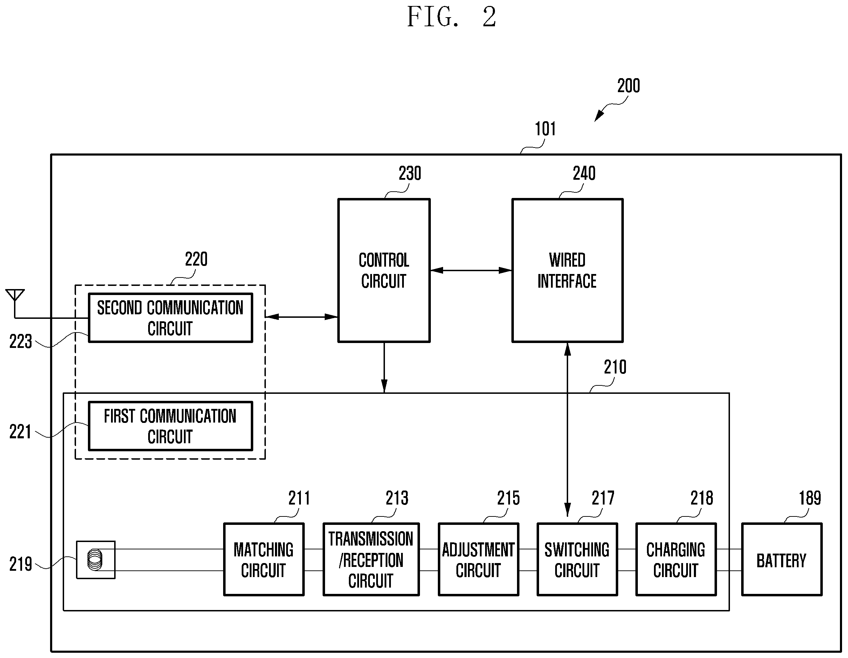

FIG. 2 is a block diagram 200 of a power circuit 210 and a battery 189 in an electronic device 101 for receiving and/or transmitting power from/to the outside of the electronic device 101 according to an embodiment of the disclosure.

Referring to FIG. 2, the electronic device 101 according to an embodiment may include at least one of the battery 189, the power circuit 210, a communication circuit 220, a control circuit 230, and/or a wired interface 240.

According to an embodiment, the battery 189 may include a battery protection circuit (a protection circuit module). The battery protection circuit may perform various functions (e.g., prevention-in-advance function) for preventing the battery 189 from performance degradation or damage by a fire. The battery protection circuit may be implemented as at least a portion of a battery management system (BMS) for performing, additionally or alternatively, cell balancing, measuring the remaining amount of the battery 189, measuring the number of charge/discharge cycles, measuring the temperature, or measuring the voltage. According to an embodiment, at least a portion of usage state information or charging state information of the battery 189 may be identified by using a fuel gauge integrated circuit (IC), a power circuit 210, or a sensor module (e.g., a temperature sensor).

According to an embodiment, the power circuit 210 may include at least one circuit configured to support wired charging for charging the battery 189 by using power input from an external electronic device (e.g., a travel adapter (TA)) through a wired interface 240, and/or at least one circuit configured to support wireless charging for charging the battery 189 by using power input from an external electronic device (e.g., a wireless charging pad) through a conductive pattern (e.g., a coil) 219.

According to an embodiment, the at least one circuit that supports wired charging may include a circuit configured to charge the battery 189 by using power input from an external electronic device (e.g., a TA), and/or a circuit configured to generate a designated voltage by using a voltage of the battery 189 and to transmit transmission power based on the designated voltage to an external electronic device through the wired interface 240 (e.g., a USB interface).

According to an embodiment, the at least one circuit that supports wireless charging may include a circuit configured to receive power from an external electronic device through the conductive pattern 219 and charge the battery 189 by using the received power (or the rectified, converted, and/or regulated power) and/or a circuit configured to convert the voltage of the power received from the battery 189 or an external electronic device (e.g., a TA) to have a designated voltage value, convert the current characteristics of the power having the designated voltage value from direct current (DC) to alternating current (AC), and transmit the power wirelessly through the conductive pattern 219.

According to an embodiment, the power circuit 210 may simultaneously perform an operation of charging the battery 189 and an operation of transmitting power to an external electronic device. For example, the charging circuit 218 may include multiple charging circuits. At least one of the multiple charging circuits may receive power from an external electronic device (e.g., a TA) through the wired interface 240 and use the received power to charge the battery 189. At least one of the multiple charging circuits may transfer the energy charged in the battery 189 to the transmission/reception circuit 213. The transmission/reception circuit 213 may transmit the power of the battery 189 received from the charging circuit 218 to an external electronic device (e.g., a smartphone or a wireless earphone cradle) through the conductive pattern 219. According to an embodiment, a wireless power transmission method, such as a magnetic field induction coupling method, a resonance coupling method, or a combination thereof, may be used for wireless charging.

According to an embodiment, the power circuit 210 may include a conductive pattern 219, a matching circuit 211, a transmission/reception circuit 213, an adjustment circuit 215, a switching circuit 217, and a charging circuit 218.

According to an embodiment, the matching circuit 211 may be configured to minimize a return loss of power when transmitting power to an external electronic device or receiving power from the external electronic device through the conductive pattern 219. For example, the matching circuit 211 may be inserted into a line between the conductive pattern 219 and the transmission/reception circuit 213 for impedance matching.

According to an embodiment, the transmission/reception circuit 213 may be configured to convert a current of a power signal from alternating current to direct current when receiving power through the conductive pattern 219. For example, the transmission/reception circuit 213 may include a rectification circuit. The transmission/reception circuit 213 may be configured to convert the current of the power signal from direct current to alternating current when transmitting power through the conductive pattern 219. For example, the transmission/reception circuit 213 may include an inverter circuit. The adjustment circuit 215 may be configured to adjust a charging voltage and may include, for example, a linear regulator (e.g., a low dropout (LDO)).

According to an embodiment, the switching circuit 217 may include at least one switch (e.g., including at least one switching circuit) for controlling power output to a device connected through the wired interface 240 (e.g., an on-the-go (OTG) device) or a wired power reception device, and power input from a wired charging device. According to an embodiment, the switching circuit 217 may further include at least one switch (e.g., at least one switching circuit) for controlling a reception function for receiving power wirelessly from an external electronic device through the conductive pattern 219 and/or a transmission function for transmitting transmission power wirelessly through the conductive pattern 219, based on the battery 189 voltage or the power input from an external electronic device (e.g., a TA). According to an embodiment, the transmission/reception circuit 213 may be implemented as a full-bridge inverter or a half-bridge inverter, but the disclosure is not limited thereto and may be modified in various forms.

According to an embodiment, the charging circuit 218 may be electrically connected to the switching circuit 217 and may adjust the voltage and/or current of the power input through wired or wireless charging. For example, the charging circuit 218 may adjust the voltage and/or current of the power input through the switching circuit 217 to charge the battery 189. According to an embodiment, the charging circuit 218 may include a switching charger (e.g., a DC/DC converter) including a buck-boost converter (not shown) and a charging controller (not shown). According to an embodiment, the charging circuit 218 may include a direct charger that supports direct charging (e.g., "DC charging") using a switched capacitor divider (switched cap divider) method. The direct charger may include an N:1 voltage divider that reduces an input voltage to 1/N (where N is a positive integer) and increases the input current by N times.

According to an embodiment, the communication circuit 220 may be a circuit for communication between a transmitter and a receiver during wireless charging and may include at least one of a first communication circuit 221 or a second communication circuit 223. The first communication circuit 221 may perform communication by carrying information on the power itself transmitted through, for example, the conductive pattern 219 (in-band communication). The first communication circuit 221 may communicate with an external electronic device by using at least one modulation technique among a frequency shift keying (FSK) technique, which carries information in a power frequency during wireless power transmission, and an amplitude shift keying (ASK) technique, which carries information in a power amplitude during wireless power reception. The first communication circuit 221 may be disposed between and electrically connected to the conductive pattern 219 and the transmission/reception circuit 213 to perform FSK or ASK communication. The second communication circuit 223 may communicate with an external electronic device by using a frequency of a band different from the frequency of the wireless power through the conductive pattern 219 (out-of-band communication). For example, the second communication circuit 223 may communicate with an external electronic device by using one of various short-range communication methods such as Bluetooth, Bluetooth low energy (BLE), Wi-Fi, and/or near field communication (NFC). Data transmitted to and received from an external electronic device through the communication circuit 220 may include information related to charging (e.g., a rectified voltage, information on a current flowing in the conductive pattern 219 or the transmission/reception circuit 213 (e.g., a current value of a power signal transmitted to the outside through the coil 219 or a current value of the power signal received from the outside through the coil 219), various packets, and/or messages for configuration. For example, according to the wireless power consortium (WPC) standard, a wireless charging operation may include a ping operation, an identification & configuration operation, and a power transfer operation. The ping operation may include an operation for identifying by the electronic device 101 whether an object (e.g., an object placed on a wireless charging pad) that is close to a power supply device is an electronic device capable of communication for power delivery (PD). As an example of the ping operation, the electronic device 101 (e.g., the control circuit 230) may receive a data signal (e.g., a digital ping signal or a wake-up signal) from the power supply device through the communication circuit 220 (e.g., the first communication circuit 221). In response to the reception of the data signal, the control circuit 230 may transmit a response signal (e.g., a signal strength packet (SSP)) to the power supply device through the communication circuit 220. The power supply device may recognize that the object in proximity is the electronic device 101, based on the reception of the response signal. The identification & configuration operation may include an operation in which the electronic device 101 configures a power value of a power signal to be transmitted by the power supply device through data communication with the power supply device using the communication circuit 220. The power transfer operation may include an operation in which the power supply device transmits a power signal having the power value configured in the identification & configuration operation to the electronic device 101. The wireless charging operation may further include an operation to determine a source for transmitting power and a sink for receiving power, through data communication between the two electronic devices.

According to an embodiment, the control circuit 230 may perform overall control of the power circuit 210 and may generate various messages required for wireless charging and transmit the various messages to the communication circuit 220. The control circuit 230 may manage the power supplied to the electronic device 101 and the power transmitted from the electronic device 101 through wireless charging. The control circuit 230 may, for example, be implemented as a power management integrated circuit (PMIC) or as at least a portion of an application processor.

According to an embodiment, the control circuit 230 may identify charging state information (e.g., charge/discharge voltage/current, battery life, overvoltage, undervoltage, overcurrent, overcharging, over-discharging, overheating, short circuit, or swelling) related to charging of the battery 189. For example, the control circuit 230 may identify a signal (a voltage or current) at an input or output terminal of the conductive pattern 219 of the power circuit 210, the matching circuit 211, or the transmission/reception circuit 213. The control circuit 230 may determine a state of the battery 189, at least partially based on the identified charging state information. The control circuit 230 may adjust (e.g., adjust a charging current, adjust a charging voltage, or stop charging) the charging of the battery 189 in case that the battery 189 is determined to be in an abnormal state. According to an embodiment, the electronic device 101 may include at least one sensor (e.g., a temperature sensor) for identifying the charging state of the battery 189. The control circuit 230 may identify the charging state of the battery 189, based on data received from the at least one sensor. For example, the control circuit 230 may determine that the battery 189 is in an overheated state if the temperature of the battery 189 being charged is equal to or higher than a predetermined temperature, and may adjust the charging of the battery 189 (e.g., adjust the charging current, adjust the charging voltage, or stop the charging).

According to an embodiment, the wired interface 240 may connect the external electronic device (e.g., a TA) and the electronic device 101 through a connector. The wired interface 240 may include a USB communication module that is connected to the control circuit 230 or a processor (e.g., the processor 120 in FIG. 1) through a designated system interface (e.g., an inter-integrated circuit (I2C) or mobile industry processor interface (MIPI)). For example, the TA may communicate with the USB communication module of the electronic device 101 through a USB port. According to an embodiment, the USB communication module may include a communication module for USB power delivery (PD) communication. According to an embodiment, an external electronic device connected to the electronic device 101 through the wired interface 240 may be a device that supports a programmable power supply (PPS) function or a device that does not support the PPS function. For example, a PPS-supported device may adjust the voltage of power output from the external electronic device to the electronic device 101, based on control of the control circuit 230 of the electronic device 101. The non-PPS supported device may fix the voltage of the power signal output from the external electronic device to the electronic device 101.

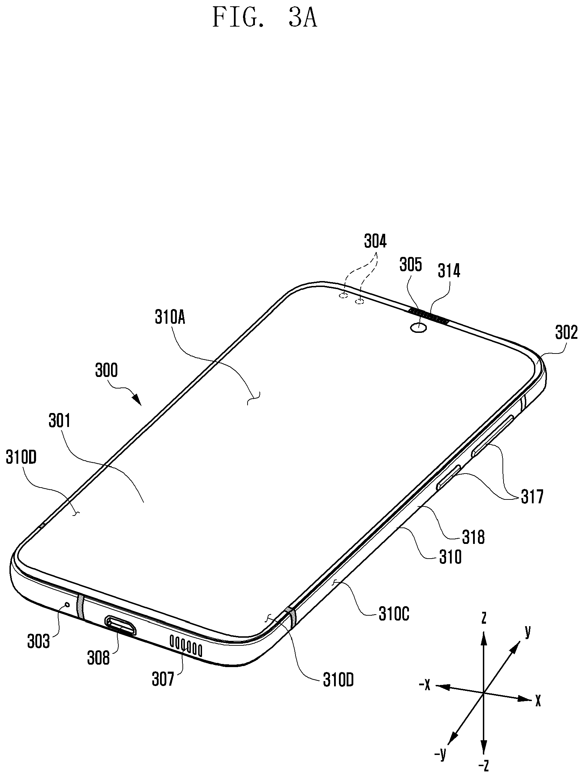

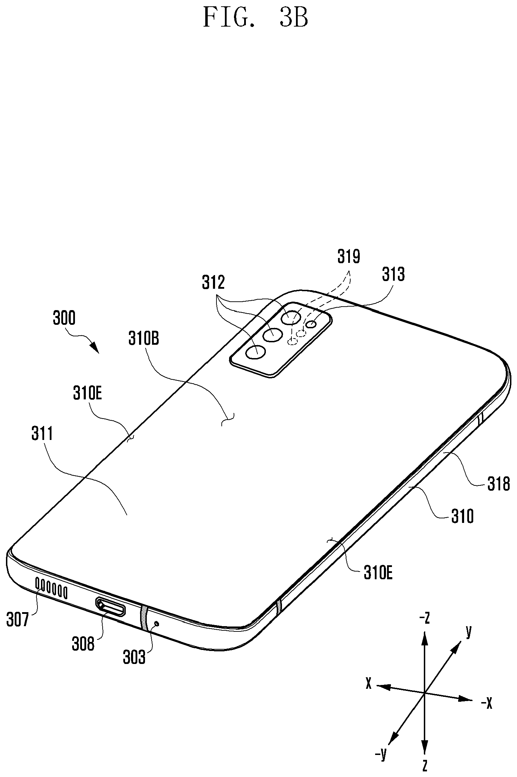

FIG. 3A is a front perspective view of an electronic device according to various embodiments of the disclosure. FIG. 3B is a rear perspective view of the electronic device in FIG. 3A according to various embodiments of the disclosure.

Referring to FIG. 3A and FIG. 3B, an electronic device 300 according to an embodiment may include a housing 310 including a first surface (or front surface) 310A, a second surface (or rear surface) 310B, and a side surface 310C surrounding the space between the first surface 310A and the second surface 310B. In another embodiment (not illustrated), the housing 310 may denote a structure that forms a part of the first surface 310A, the second surface 310B, and the side surface 310C illustrated in FIG. 3A and FIG. 3B. According to an embodiment, the first surface 310A may be formed by a front plate 302, at least a part of which is substantially transparent (for example, a glass plate including various coating layers, or a polymer plate). The second surface 310B may be formed by a rear plate 311 that is substantially opaque. The rear plate 311 may be made of coated or colored glass, ceramic, polymer, metal (for example, aluminum, stainless steel (STS), or magnesium), or a combination of at least two of the above-mentioned materials. The side surface 310C may be formed by a side bezel structure (or "side member") 318 which is coupled to the front plate 302 and to the rear plate 311, and which includes metal and/or polymer. In some embodiments, the rear plate 311 and the side bezel structure 318 may be formed integrally and may include the same material (for example, a metal material such as aluminum).

In the illustrated embodiment, the front plate 302 may include two first areas 310D on both ends of the long edge of the front plate 202 such that the two first areas 310D bend from the first surface 310A toward the rear plate 311 and extend seamlessly. In the illustrated embodiment (see FIG. 3B), the rear plate 311 may include two second areas 310E on both ends of the long edge such that the two second areas 310E bend from the second surface 310B toward the front plate 302 and extend seamlessly. In some embodiments, the front plate 302 (or the rear plate 311) may include only one of the first areas 310D (or the second areas 310E). In another embodiment, a part of the first areas 310D or the second areas 310E may not be included. In the above embodiments, when seen from the side surface of the electronic device 300, the side bezel structure 318 may have a first thickness (or width) on a part of the side surface, which does not include the first areas 310D or the second areas 310E as described above, and may have a second thickness that is smaller than the first thickness on a part of the side surface, which includes the first areas 310D or the second areas 310E.

According to an embodiment, the electronic device 300 may include at least one of a display 301, input module 303, sound output modules 307 and 314, sensor modules 304 and 319, camera modules 305, 312, and 313, a key input device 317, indicator, and connector 308. In some embodiments, at least one of the constituent elements (for example, the key input device 317 or the indicator) of the electronic device 300 may be omitted, or the electronic device 300 may additionally include another constituent element.

The display 301 may be exposed through a corresponding part of the front plate 302, for example. In some embodiments, at least a part of the display 301 may be exposed through the front plate 302 that forms the first areas 310D of the side surface 310C and the first surface 310A. In some embodiments, the display 301 may have a corner formed in substantially the same shape as that of the adjacent outer periphery of the front plate 302. In another embodiment (not illustrated), in order to increase the area of exposure of the display 301, the interval between the outer periphery of the display 301 and the outer periphery of the front plate 302 may be formed to be substantially identical.

The input module 303 may include a microphone. A microphone for acquiring an external sound may be arranged in the microphone 303, and a plurality of microphones may be arranged therein such that the direction of a sound can be sensed in some embodiments. The sound output modules 307 and 314 may include speakers 307 and 314. The speakers 307 and 314 may include an outer speaker 307 and a speech receiver 314.

The sensor modules 304 and 319 may generate an electric signal or a data value corresponding to the internal operating condition of the electronic device 300 or the external environment condition thereof. The sensor modules 304 and 319 may include, for example, a first sensor module 304 (for example, a proximity sensor) arranged on the first surface 310A of the housing 310, and/or a second sensor module (not illustrated) (for example, a fingerprint sensor), and/or a third sensor module 319 (for example, an HRM sensor) arranged on the second surface 310B of the housing 310. The electronic device 300 may further include a sensor module not illustrated, for example, at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or a luminance sensor 304.

The camera modules 305, 312, and 313 may include a first camera device 305 arranged on the first surface 310A of the electronic device 300, a second camera device 312 arranged on the second surface 310B thereof, and/or a flash 313. The camera devices 305 and 312 may include a single lens or a plurality of lenses, an image sensor, and/or an image signal processor. The flash 313 may include, for example, a light-emitting diode or a xenon lamp. In some embodiments, two or more lenses (an infrared camera, a wide-angle lens, and a telephoto lens) and image sensors may be arranged on a single surface of the electronic device 300.

The key input device 317 may be arranged on the side surface 310C of the housing 310. In another embodiment, the electronic device 300 may not include a part of the above-mentioned key input device 317 or the entire key input device 317, and the key input device 317 (not included) may be implemented in another type, such as a soft key, on the display 301. In some embodiments, the key input device may include a sensor module arranged on the second surface 310B of the housing 310.

The indicator may be arranged on the first surface 310A of the housing 310, for example. The indicator may provide information regarding the condition of the electronic device 300 in a light type, for example. In another embodiment, the indicator may provide a light source that interworks with operation of the camera module 305, for example. The indicator may include, for example, an LED, an IR LED, and a xenon lamp.

The connector may include a first connector hole 308 capable of containing a connector (for example, a USB connector) for transmitting/receiving power and/or data to/from an external electronic device, and/or a second connector hole (for example, an earphone jack) capable of containing a connector for transmitting/receiving an audio signal to/from the external electronic device.

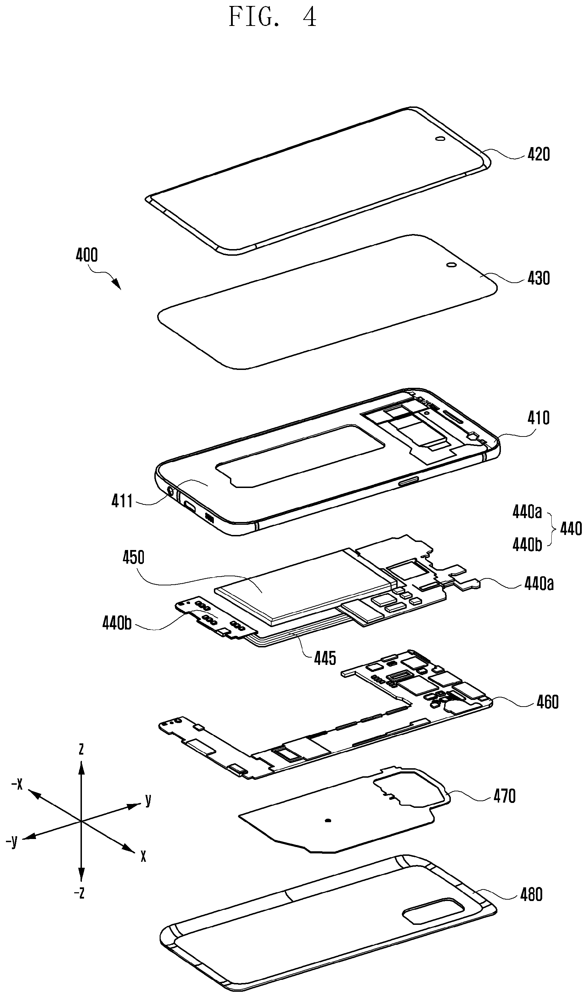

FIG. 4 is an exploded perspective view of the electronic device according to various embodiments of the disclosure.

Referring to FIG. 4, the electronic device 400 may include a side bezel structure 410, a first support member 411 (for example, a bracket), a front plate 420, a display 430, a printed circuit board 440, a battery 450, a second support member 460 (for example, a rear case), an antenna 470, and a rear plate 480. In some embodiments, at least one of the constituent elements (for example, the first support member 411 or the second support member 460) of the electronic device 400 may be omitted, or the electronic device 400 may further include another constituent element. At least one of the constituent elements of the electronic device 400 may be identical or similar to at least one of the constituent elements of the electronic device of FIG. 1 to FIG3B, and repeated descriptions thereof will be omitted herein.

The first support member 411 may be arranged inside the electronic device 400 and connected to the side bezel structure 410, or may be formed integrally with the side bezel structure 410. The first support member 411 may be made of a metal material and/or a nonmetal (for example, polymer) material, for example. The display 430 may be coupled to one surface of the first support member 411, and the printed circuit board 440 may be coupled to the other surface thereof.

A processor, a memory, and/or an interface may be mounted on the printed circuit board 440. The processor may include, for example, one or more of a central processing device, an application processor, a graphic processing device, an image signal processor, a sensor hub processor, or a communication processor.

According to an embodiment, the printed circuit board 440 may include a first PCB 440a and/or a second PCB 440b. For example, the first PCB 440a and the second PCB 440b may be arranged to be spaced apart from each other and may be electrically connected to each other by using a connection member 445 (e.g., a coaxial cable and/or a FPCB). In an embodiment, the printed circuit board 440 may include a structure in which multiple printed circuit boards (PCBs) are stacked on each other. For example, the printed circuit board 440 may include an interposer structure. In an embodiment, the printed circuit board 440 may be implemented as a flexible printed circuit board (FPCB) form and/or a rigid printed circuit board (PCB) form.

The memory may include, for example, a volatile memory or a nonvolatile memory.

The interface may include, for example, a high-definition multimedia interface (HDMI), a universal serial bus (USB) interface, a SD card interface, and/or an audio interface. The interface may electrically or physically connect, for example, the electronic device 300 and an external electronic device and may include a USB connector, an SD care/MMC connector, or an audio connector.

The battery 450 may be a device for supplying power to at least one component of the electronic device 400 and may include a non-rechargeable primary battery, or a rechargeable secondary battery, or a fuel cell. At least a portion of the battery 450 may be disposed, for example, on a substantially identical plane to the printed circuit board 440. The battery 450 may be integrally disposed inside the electronic device 400. In another embodiment, the battery 450 may disposed to be attachable to/detachable from the electronic device 400.

The antenna 470 may be interposed between the rear plate 480 and the battery 450. The antenna 470 may include, for example, a near field communication (NFC) antenna, a wireless charging antenna, and/or a magnetic secure transmission (MST) antenna. The antenna 470 may wirelessly transmit and receive power required for charging or perform near field communication with an external device, for example. In another embodiment, an antenna structure may be formed by a portion or a combination of the lateral bezel structure 310 and/or the first support member 411.

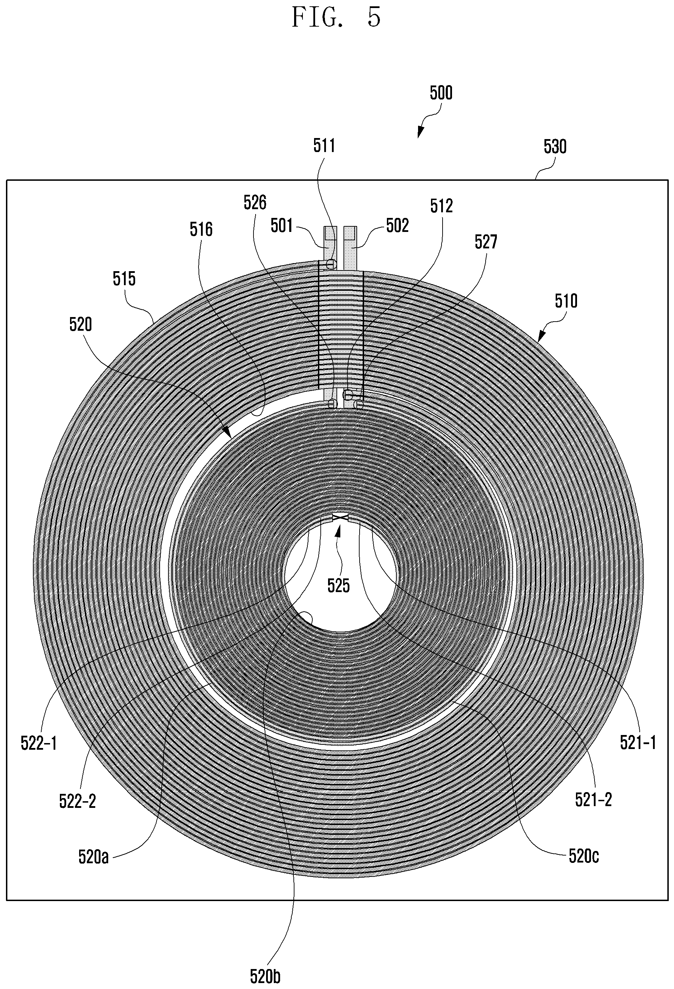

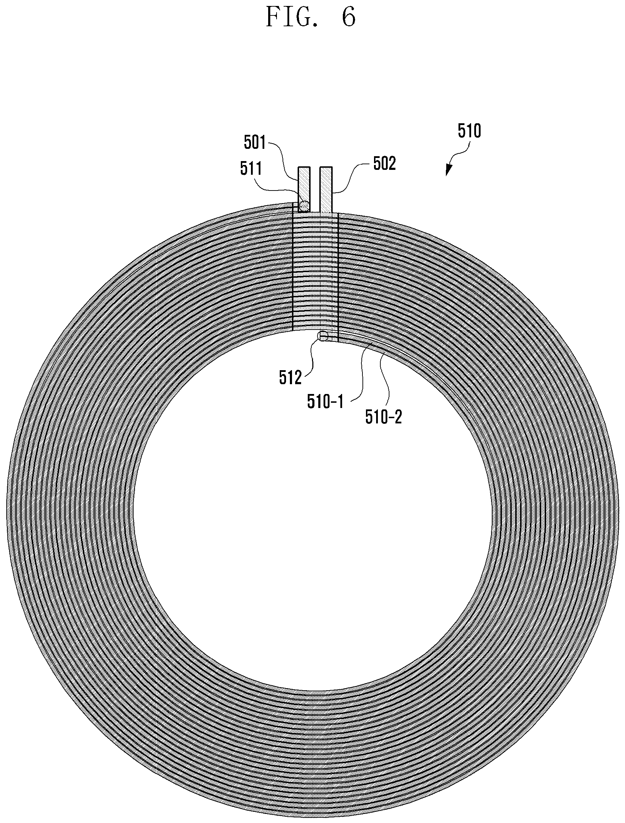

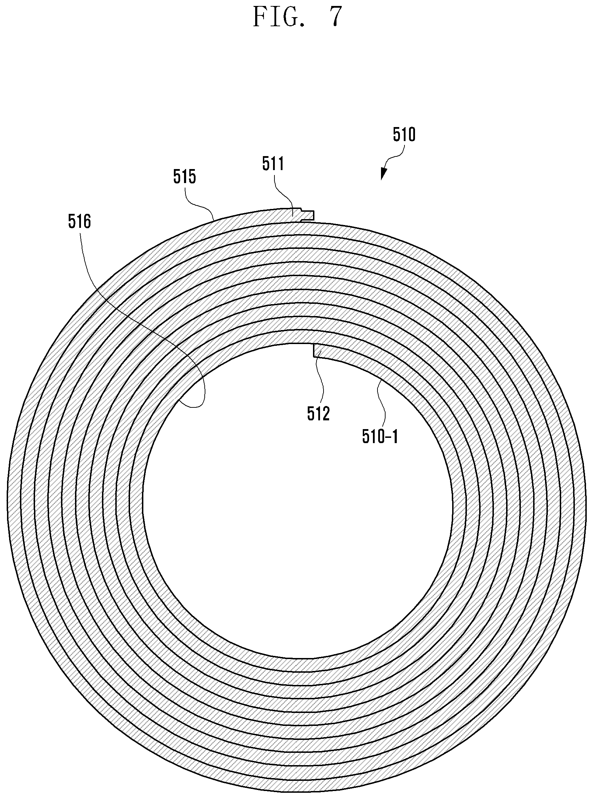

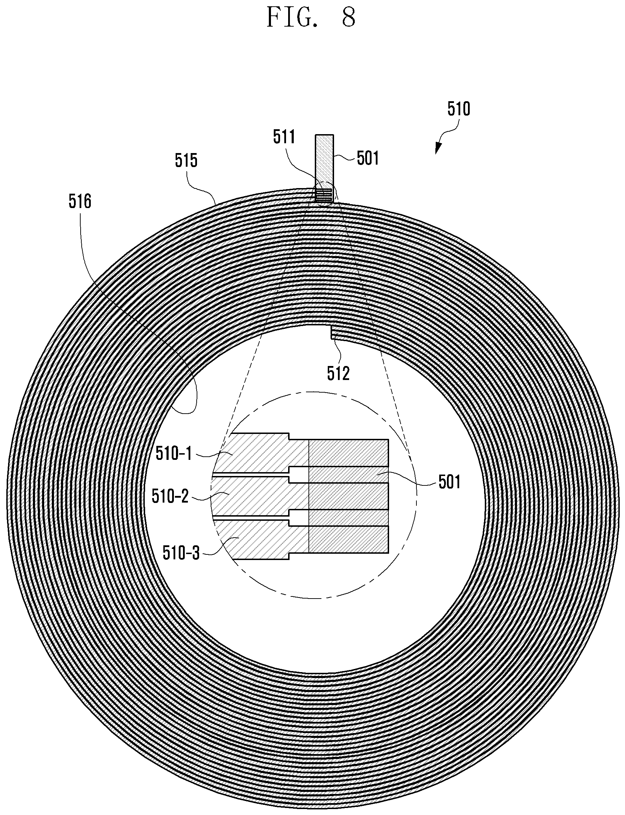

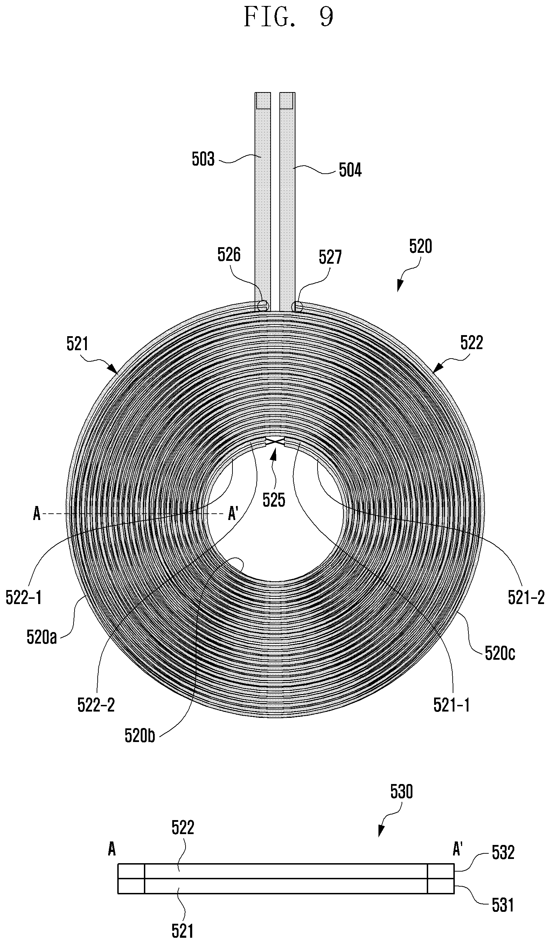

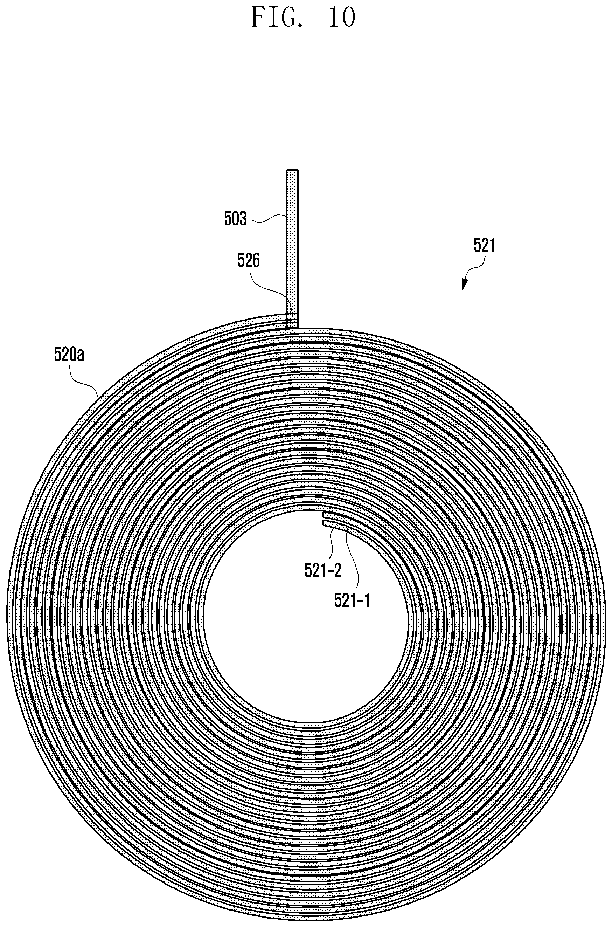

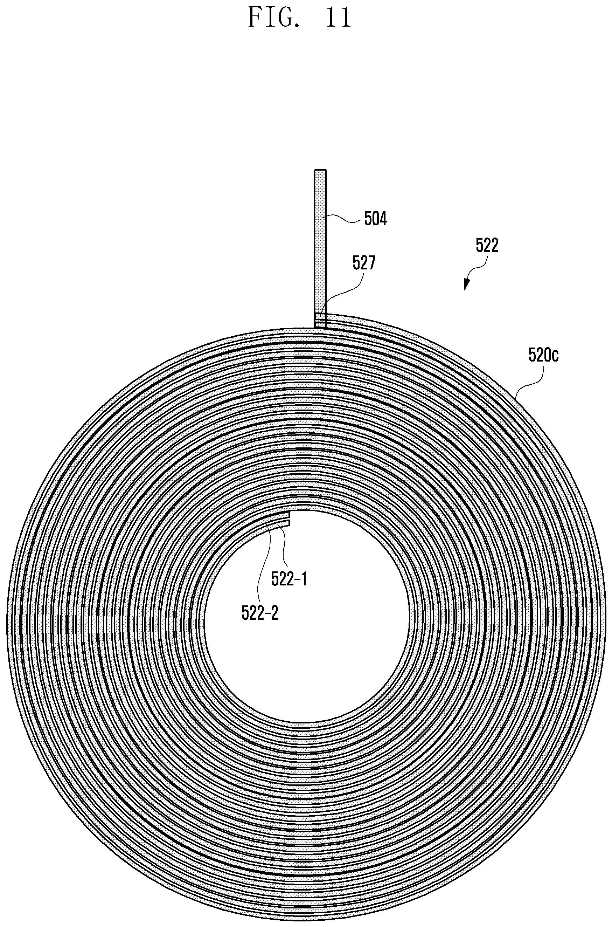

FIG. 5 is a schematic diagram illustrating a first coil, a second coil, and a circuit board included in an electronic device according to an embodiment of the disclosure. FIG. 6 is a schematic diagram illustrating the first coil shown in FIG. 5 according to an embodiment of the disclosure. FIG. 7 is a schematic diagram illustrating a first coil, in which a single wire is wound in a spiral shape, according to an embodiment of the disclosure. FIG. 8 is a schematic diagram illustrating a first coil, in which three wires are wound in a spiral shape, according to an embodiment of the disclosure. FIG. 9 is a schematic diagram illustrating a configuration of a second coil according to an embodiment of the disclosure. FIG. 10 is a schematic diagram illustrating a second 2-1st winding of a second coil disposed in a first layer of a circuit board according to an embodiment of the disclosure. FIG. 11 is a schematic diagram illustrating a second 2-2nd winding of a second coil disposed in a second layer of a circuit board according to an embodiment of the disclosure.

According to various embodiments, the electronic device 500 in FIG. 5 may include the electronic device 101 described in FIGS. 1 and 2, the electronic device 300 described in FIGS. 3A and 3B, and/or the electronic device 400 described in FIG. 4. The electronic device 500 in FIG. 5 may include components of the electronic device 101 in FIGS. 1 and 2, components of the electronic device 300 in FIGS. 3A and 3B, and/or components of the electronic device 400 in FIG. 4 in a substantially identical manner.

According to various embodiments, the battery described below may include the battery 189 described in FIGS. 1 and 2 and/or the battery 450 described in FIG. 4. The first coil 510 and the second coil 520 described below may include the conductive pattern 219 described in FIG. 2. The first coil 510 and the second coil 520 described below may perform functions and operations that are substantially identical to those of the conductive pattern 219 described in FIG. 2.

According to various embodiments, a wire or sub-line described below are substantially the same elements, even though the expressions differ, and may be a conductive wire (e.g., copper or aluminum) configuring the first coil 510 and the second coil 520.

Referring to FIG. 5, the electronic device 500 according to an embodiment of the disclosure may include a circuit board 530, a first coil 510, and a second coil 520.

According to an embodiment, the circuit board 530 may include the first coil 510 and the second coil 520. For example, the circuit board 530 may be disposed on the antenna 470 described in FIG. 4. For example, the circuit board 530 may be disposed in a first surface (e.g., the z-axis direction or upper surface) or a second surface (e.g., the -z-axis direction or lower surface) of the antenna 470 shown in FIG. 4.

According to various embodiments, the circuit board 530 may include a printed circuit board (PCB), a flexible printed circuit board (FPCB), or a rigid flexible printed circuit board (RFPCB). The circuit board 530 may include a structure in which multiple circuit boards are stacked. For example, the circuit board 530 may include multiple layers.

According to an embodiment, the first coil 510 and the second coil 520 may be disposed on the circuit board 530. The first coil 510 and the second coil 520 may be disposed on the circuit board 530. For example, the first coil 510 and the second coil 520 may be disposed on the same layer of the circuit board 530. For example, the first coil 510 and the second coil 520 may be disposed on different layers of the circuit board 530. For example, the first coil 510 may be disposed at a designated location (e.g., the outer side) of the circuit board 530, and the second coil 520 may be disposed at the inner side of the first coil 510.

According to various embodiments, the first coil 510 and/or the second coil 510 may supply power to a battery (e.g., the battery 189 in FIGS. 1 and 2 and/or the battery 450 in FIG. 4) included in the electronic device 500. According to various embodiments, the first coil 510 and/or the second coil 510 may provide power to an external electronic device (e.g., a watch or a wireless earphone).

According to an embodiment, the first coil 510 may include multiple first windings. The first coil 510 may be configured in a form in which at least one wire (e.g., a conductive wire or a sub-line) is wound in a spiral shape. For example, the first coil 510 may include a form in which at least one wire is wound multiple turns (e.g., multiple times) in a first direction (e.g., a counterclockwise direction), based on a start point 511 (e.g., the first end portion) of an outermost winding 515 among the multiple first windings. For example, an end point 512 (e.g., a second end) of the first coil 510 may be positioned at an end portion of an innermost winding 516 of the multiple first windings of the first coil 510.

Referring to FIGS. 5 and 6, a start point 511 of the first coil 510 (e.g., a first end portion of the two wires 510-1 and 510-2 described in FIG. 6) may be electrically connected to a first feed terminal 501. An end point 512 of the first coil 510 (e.g., a second end of the two wires 510-1 and 510-2 described in FIG. 6) may be electrically connected to a second feed terminal 502. For example, the first coil 510 may include a form in which a first wire 510-1 (e.g., a first sub-line 510-1) and a second wire 510-2 (e.g., a second sub-line 510-2) are wound in a spiral shape. For example, the first wire 510-1 may be disposed at the outer side of the second wire 510-2, and the second wire 510-2 may be disposed at the inner side of the first wire 510-1.

Referring to FIG. 7, the first coil 510 may include a form in which a single wire 510-1 (e.g., a sub-line) is wound in a spiral shape. For example, the first coil 510 may include a form in which a single wire 510-1 is wound multiple turns (e.g., multiple times) in a first direction (e.g., a counterclockwise direction), based on the start point 511 (e.g., the first end portion) of an outermost winding 515. For example, an end point 512 (e.g., a second end portion) of the first coil 510 may be positioned at an end portion of the innermost winding 516 of the first coil 510. The start point 511 (e.g., the first end portion) of the first coil 510, in which a single wire 510-1 (e.g., a sub-line) is wound in a spiral shape may be electrically connected to the first feed terminal 501 described in FIG. 5. The end point 512 (e.g., the second end portion) of the first coil 510 may be electrically connected to the second feed terminal 502 described in FIG. 5. For example, FIG. 7 schematically illustrates the first coil 510, in which a single wire 510-1 is wound in a spiral shape, and may be a diagram in which the first feed terminal 501 and the second feed terminal 502 described in FIG. 5 are omitted.

Referring to FIG. 8, the first coil 510 may have a form in which the first wire 510-1 (e.g., a first sub-line 510-1), the second wire 510-2 (e.g., the second sub-line 510-2), and a third wire 510-3 (e.g., a third sub-line) are wound in a spiral shape. For example, the first wire 510-1 may be disposed at the outer side of the second wire 510-2, and the third wire 510-3 may be disposed at the inner side of the second wire 510-2. The second wire 510-2 may be disposed between the first wire 510-1 and the third wire 510-3. For example, the first coil 510 may include a form in which the three wires 510-1, 510-2, and 510-3 are wound multiple turns (e.g., multiple times) in the first direction (e.g., the counterclockwise direction), based on the start point 511 (e.g., first end portions of the three wires 510-1, 510-2, and 510-3) of the outermost winding 515. For example, the end point 512 (e.g., second end portions of the three wires 510-1, 510-2, and 510-3) of the first coil 510 may be positioned at the end portion of the innermost winding 516 of the first coil 510. The start point 511 (e.g., the first end) of the first coil 510, in which the three wires 510-1, 510-2, and 510-3 are wound in a spiral shape, may be electrically connected to the first feed terminal 501. The end point 512 (e.g., the second end portion) of the first coil 510 may be electrically connected to the second feed terminal 502 described in FIG. 5. For example, FIG. 8 may be a schematic diagram of the first coil 510, in which three wires 510-1, 510-2, and 510-3 are wound in a spiral shape.

According to various embodiments, the first coil 510 is not limited to the single wire 510-1 described in FIG. 7, the two wires 510-1 and 510-2 described in FIG. 6, and the three wires 510-1, 510-2, and 510-3 described in FIG. 8, and may include a form in which at least one wire (e.g., the first wire 510-1 to an Nth wire 510-N) is wound in a spiral shape.

According to various embodiments, the first coil 510 is not limited to the spirally wound shape described above, and may include various shapes such as an elliptical or polygonal shape (e.g., a square or a hexagon). For example, the single wire 510-1 (e.g., a sub-line) shown in FIG. 7 may be divided into a first wire 510-1 and a second wire 510-2 as shown in FIG. 6. For example, in case that the single wire 510-1 is formed to be divided into the first wire 510-1 and the second wire 510-2, the width of the single wire 510-1 may be formed to be substantially identical to the combined width of the two divided wires including the first wire 510-1 and the second wire 510-2. For example, the single wire 510-1 shown in FIG. 7 may be divided into the first wire 510-1, the second wire 510-2, and the third wire 510-3, as shown in FIG. 8. For example, in a case that the single wire 510-1 is formed to be divided into the first wire 510-1, the second wire 510-2, and the third wire 510-3, the width of the single wire 510-1 may be formed to be substantially identical to the combined width of the three divided wires including the first wire 510-1, the second wire 510-2, and the third wire 510-3.

According to various embodiments, the first coil 510 may be disposed on multiple layers (e.g., a first layer and a second layer) of the circuit board 530. For example, the multiple first windings of the first coil 510 may be disposed in the first layer and the second layer that overlap each other.

According to an embodiment, the circuit board 530 may have a structure in which multiple layers are stacked. The first coil 510 may be disposed on at least one layer (not shown) of the circuit board 530. The circuit board 530 may include a base substrate (not shown). For example, a portion of the first coil 510 may be disposed in the first layer (not shown) positioned in a first direction (e.g., the bottom of the base substrate) of the base substrate. For example, another portion of the first coil 510 may be disposed in the second layer (not shown) positioned in a second direction (e.g., the top of the base substrate) of the base substrate. For example, the first layer and/or the second layer may include a spirally wound shape.

According to an embodiment, the first coil 510 may include at least one conductive wire. The conductive wire may include a form in which at least one wire is wound multiple turns (e.g., multiple times) in the first direction (e.g., the counterclockwise direction). For example, at least a portion of the first feed terminal 501 or the second feed terminal 502 may be disposed to overlap with a region in which the first coil 510 is wound. For example, an end portion of the first feed terminal 501 or the second feed terminal 502 may be disposed to face the outer or inner direction of the first coil 510.

According to an embodiment, the second coil 520 may be disposed at the inner side of the first coil 510. For example, the second coil 520 may be substantially surrounded by an innermost winding 516 of the multiple first windings of the first coil 510. The second coil 520 may include a multiple second windings configured to provide power to an external electronic device (e.g., the external electronic devices 102 and 104 in FIG. 1). For example, the external electronic devices 102 and 104 may include wearable electronic devices (e.g., a watch and/or a wireless earphone). The second coil 520 may be configured in a form in which at least two or more wires (e.g., conductive wires or sub-lines) are wound in a spiral shape.

According to an embodiment, a second number of the multiple second windings (e.g., wires) of the second coil 520 may be greater than a first number of the multiple first windings (e.g., wires) of the first coil 510. For example, the number of turns (e.g., wrap times) of the multiple second windings of the second coil 520 may be greater than the number of turns (e.g., wrap times) of the multiple first windings of the first coil 510. For example, the number of turns (e.g., wrap times) of the wires (e.g., windings) of the second coil 520 may be greater than the number of turns (e.g., wrap times) of the wires (e.g., windings) of the first coil 510.

According to an embodiment, the inductance of the second coil 520 may be greater than the inductance of the first coil 510. For example, the inductance of the second coil 520 may be formed to be about 1.5 to 2 times the inductance of the first coil 510. For example, the inductance of the first coil 510 may be about 10 µF to 12 µF, and the inductance of the second coil 520 may be about 15 µF to 24 µF.

Referring to FIG. 5 and FIGS. 9 to 11, the multiple second windings of the second coil 520 may include a 2-1st winding 521 and a 2-2nd winding 522. For example, the 2-1st winding 521 of the second coil 520 may be disposed in a first layer 531 of the circuit board 530. For example, the 2-2nd winding 522 of the second coil 520 may be disposed in a second layer 532 of the circuit board 530. According to an embodiment, the first layer 531 on which the 2-1st winding 521 is disposed and the second layer 532 on which the 2-2nd winding 522 is disposed may overlap each other. For example, in the embodiment shown in FIG. 9, the first layer 531 on which the 2-1st winding 521 is disposed and the second layer 532 on which the 2-2nd winding 522 is disposed are aligned and overlap each other, but without limitation thereto, the first layer 531 on which the 2-1st winding 521 is disposed and the second layer 532 on which the 2-2nd winding 522 is disposed may at least partially overlap.

According to an embodiment, the second coil 520 may include the 2-1st winding 521 and the 2-2nd winding 522. For example, the 2-1st winding 521 may include a form in which a first wire 521-1 (e.g., a first sub-line 521-1) and a second wire 521-2 (e.g., a second sub-line 521-2) are wound in a spiral shape. For example, the 2-1st winding 521 of the second coil 520 may be disposed in the first layer 531. For example, the 2-2nd winding 522 of the second coil 520 may be disposed in the second layer 532. The first wire 521-1 and the second wire 521-2 of the 2-1st winding 521 disposed in the first layer 531 and the first wire 522-1 and the second wire 522-2 of the 2-2nd winding 522 disposed in the second layer 532 may be connected to each other in an intersection region 525 (e.g., an intersection point).

According to an embodiment, the circuit board 530 may have a structure in which multiple layers are stacked. The second coil 520 may be disposed on at least one layer (e.g., the first layer 531 and/or the second layer 532 in FIG. 9) of the circuit board 530. The circuit board 530 may include a base substrate (not shown). For example, the 2-1st winding 521 of the second coil 520 may be disposed in the first layer 531 located in the first direction of the base substrate. For example, the 2-2nd winding 522 of the second coil 520 may be disposed in the second layer 532 located in the second direction of the base substrate. For example, the first layer 531 and/or the second layer 532 may include a spirally wound shape.

According to an embodiment, among the multiple second windings of the second coil 520, the 2-1st winding 521 disposed in the first layer 531 of the circuit board 530 may include a first wire 521-1 (e.g., a first sub-line 521-1) and a second wire 521-2 (e.g., a second sub-line 521-2). For example, the first wire 521-1 (e.g., a first sub-line or an outer wire) of the 2-1st winding 521 may be disposed at the outer side of the second wire 521-2 (e.g., a second sub-line or an inner wire) on the first layer 531.

According to an embodiment, among the multiple second windings of the second coil 520, the 2-2nd winding 522 disposed in the second layer 532 of the circuit board 530 may include a first wire 522-1 (e.g., a first sub-line 522-1) and a second wire 522-2 (e.g., a second sub-line 522-2). For example, the first wire 522-2 (e.g., a first sub-line or an inner wire) of the 2-2nd winding 522 may be disposed at the inner side of the second wire 522-2 (e.g., a second sub-line or an outer wire) on the second layer 532.

According to an embodiment, an innermost winding 520b of the multiple second windings (e.g., the 2-1st winding 521 and the 2-2nd winding 522) of the second coil 520 may have at least one intersection region 525 (e.g., an intersection point) positioned thereon. For example, in the intersection region 525, the first wire 521-1 (e.g., the first sub-line 521-1) of the 2-1st winding 521 disposed in the first layer 531 and the first wire 522-1 (e.g., the first sub-line 522-1) of the 2-2nd winding 522 disposed in the second layer 532 may be connected. For example, in the intersection region 525, the second wire 521-2 (e.g., the second sub-line 521-2) of the 2-1st winding 521 disposed in the first layer 531 and the second wire 522-2 (e.g., the second sub-line 522-2) of the 2-2nd winding 522 disposed in the second layer 532 may be connected. For example, in case that, in the intersection region 525, the first wire 521-1 (e.g., the first sub-line) of the 2-1st winding 521 disposed in the first layer 531 and the first wire 522-1 (e.g., the first sub-line) of the 2-2nd winding 522 disposed in the second layer 532 are connected, and the second wire 521-2 (e.g., the second sub-line) of the 2-1st winding 521 disposed in the first layer 531 and the second wire 522-2 (e.g., the second sub-line) of the 2-2nd winding 522 disposed in the second layer 532 are connected, the lengths of the inner and outer wires of the second coil 520 may be formed to be substantially identical. For example, in case that the inner wire and the outer wire of the second coil 520 are formed to have substantially the same length, and a current flows through the second coil 520, no impedance difference may occur between the inner and outer wires, and a uniform current density may be formed and distributed in the second coil 520.

According to an embodiment, the start point 526 (e.g., the first end portion) of the second coil 520 may be positioned at the outermost winding 520a of the 2-1st winding 521 disposed in the first layer 531 among the multiple second windings. For example, the start point 526 (e.g., the first end portion) of the second coil 520 may be positioned at the outermost winding 520a among the multiple second windings on the first layer 531.

According to an embodiment, the end point 527 (e.g., the second end portion) of the second coil 520 may be positioned at the outermost winding 520c of the 2-2nd winding 522 disposed in the second layer 532 among the multiple second windings. For example, the end point 527 (e.g., the second end portion) of the second coil 520 may be positioned at the outermost winding 520c among the multiple second windings on the second layer 532.

According to an embodiment, the start point 526 (e.g., the first end portion) of the second coil 520 may be electrically connected to a third feed terminal 503. The end point 527 (e.g., the second end portion) of the second coil 520 may be electrically connected to a fourth feed terminal 504. For example, the third feed terminal 503 may be electrically connected to the first feed terminal 501 shown in FIG. 5. For example, the fourth feed terminal 504 may be electrically connected to the second feed terminal 502 shown in FIG. 5.

According to various embodiments, the third feed terminal 503 connected to the start point 526 of the second coil 520 and the fourth feed terminal 504 connected to the end point 527 may be omitted. For example, in case that the third feed terminal 503 and the fourth feed terminal 504 of the second coil 520 are omitted, the first feed terminal 501 and the second feed terminal 502 shown in FIG. 5 may be used in common. For example, in case that the third feed terminal 503 and the fourth feed terminal 504 of the second coil 520 are omitted, the start point 526 of the second coil 520 may be electrically connected to the first feed terminal 501 of the first coil 510 shown in FIG. 5. For example, the end point 527 of the second coil 520 may be electrically connected to the second feed terminal 502 of the first coil 510 shown in FIG. 5. For example, the first feed terminal 501 and the second feed terminal 502 may be disposed on the same layer and/or different layers of the circuit board 530. For example, the first feed terminal 501, the second feed terminal 502, the third feed terminal 503, and the fourth feed terminal 504 may be disposed on the same layer and/or different layers of the circuit board 530.

According to an embodiment, the 2-1st winding 521 disposed in the first layer 531 and the 2-2nd winding 522 disposed in the second layer 522 may overlap each other. The 2-1st winding 521 disposed in the first layer 531 and the 2-2nd winding 522 disposed in the second layer 532 may have a symmetrical shape when the first layer 531 and the second layer 532 overlap each other. For example, the 2-1st winding 521 and the 2-2nd winding 522 may have a symmetrical shape, with respect to a virtual center line between the first layer 531 and the second layer 532. According to various embodiments, the 2-1st winding 521 disposed in the first layer 531 and the 2-2nd winding 522 disposed in the second layer 532 may have an asymmetric shape with respect to each other when the first layer 531 and the second layer 532 overlap each other. For example, the 2-1st winding 521 and the 2-2nd winding 522 may have an asymmetric shape with respect to a virtual center line between the first layer 531 and the second layer 532.

Referring to FIG. 10, among the multiple second windings of the second coil 520, the 2-1st winding 521 disposed in the first layer 531 of the circuit board 530 may be configured in a form in which the first wire 521-1 (e.g., the first sub-line or outer wire) and the second wire 521-2 (e.g., the second sub-line or inner wire) are wound in a spiral shape. For example, the 2-1st winding 521 of the second coil 520 may include a form in which the first wire 521-1 (e.g., the first sub-line or outer wire) and the second wire 521-2 (e.g., the second sub-line or inner wire) are wound multiple turns (e.g., multiple times) in the first direction (e.g., the counterclockwise direction), with reference to the start point 526 of the outermost winding 520a of the 2-1st winding 521. For example, the first wire 521-1 (e.g., the first sub-line or outer wire) may be disposed at the outer side of the second wire 521-2 (e.g., the second sub-line or inner wire) on the first layer 531 of the circuit board 530.

Referring to FIG. 11, among the multiple second windings of the second coil 520, the 2-2nd winding 522 disposed in the second layer 532 of the circuit board 530 may be configured in a form in which the first wire 522-1 (e.g., the first sub-line or inner wire) and the second wire 522-2 (e.g., the second sub-line or outer wire) are wound in a spiral shape. For example, the 2-2nd winding 522 of the second coil 520 may include a form in which the first wire 522-1 (e.g., the first sub-line or inner wire) and the second wire 522-2 (e.g., the second sub-line or outer wire) are wound multiple turns (e.g., multiple times) in the second direction (e.g., the clockwise direction), with reference to the end point 527 of the outermost winding 520c of the 2-2nd winding 521. For example, the first wire 522-1 (e.g., the first sub-line or inner wire) may be disposed at the inner side of the second wire 522-2 (e.g., the second sub-line or outer wire) on the second layer 531 of the circuit board 530.

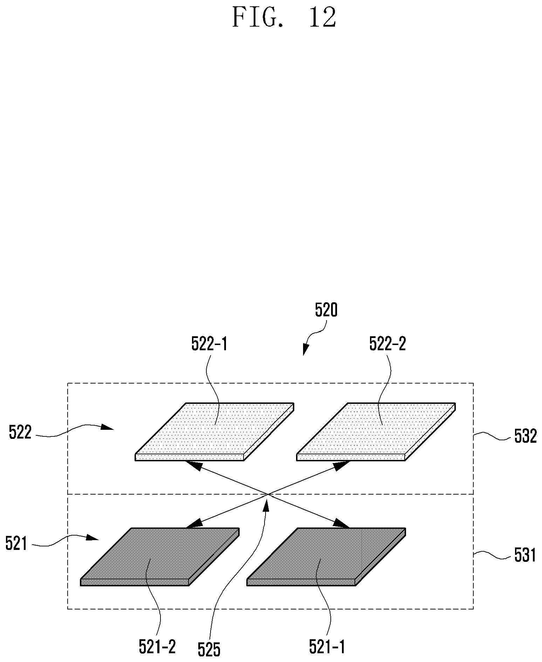

FIG. 12 is a schematic diagram illustrating a configuration in which a 2-1st winding and a 2-2nd winding of a second coil are connected to each other in an intersection region according to an embodiment of the disclosure.

According to an embodiment, in the intersection region 525 (e.g., the intersection point) disclosed in FIGS. 5 and 9, the second coil 520 may have the first wire 521-1 (e.g., the first sub-line 521-1) of the 2-1st winding 521 disposed in the first layer 531 of the circuit substrate 530 and the first wire 522-1 (e.g., the first sub-line 522-1) of the 2-2nd winding 522 disposed in the second layer 532 of the circuit substrate 530 connected to each other. For example, in the intersection region 525, the second coil 520 may have the second wire 521-2 (e.g., the second sub-line 521-2) of the 2-1st winding 521 disposed in the first layer 531 of the circuit board 530, and the second wire 522-2 (e.g., the second sub-line 522-2) of the 2-2nd winding 522 disposed in the second layer 532 of the circuit board 530 connected to each other.

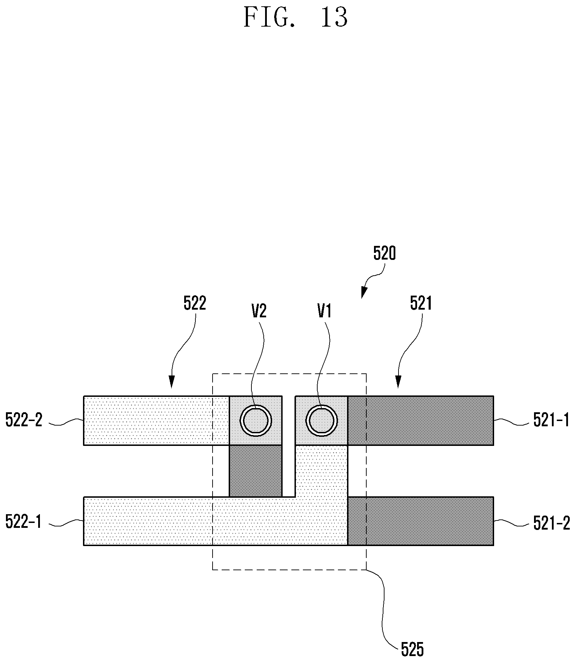

FIG. 13 is a schematic diagram illustrating a configuration in which a 2-1st winding and a 2-2nd winding of a second coil are connected are connected through at least one via according to an embodiment of the disclosure.

For example, FIG. 13 may include an embodiment relating to the intersection region 525 shown in FIGS. 5, 9, and 14.

According to an embodiment, in the intersection region 525, the second coil 520 may have the first wire 521-1 (e.g., the first sub-line 521-1) of the 2-1st winding 521 connected to the first wire 522-1 (e.g., the first sub-line 522-1) of the 2-2nd winding 522 through a first via V1. For example, in the intersection region 525, the second coil 520 may have the second wire 521-1 (e.g., the second sub-line 521-2) of the 2-1st winding 521 connected to the second wire 522-2 (e.g., the second sub-line 522-2) of the 2-2nd winding 522 through a second via V2. For example, the first via V1 and the second via V2 may be configured in the circuit board 530.

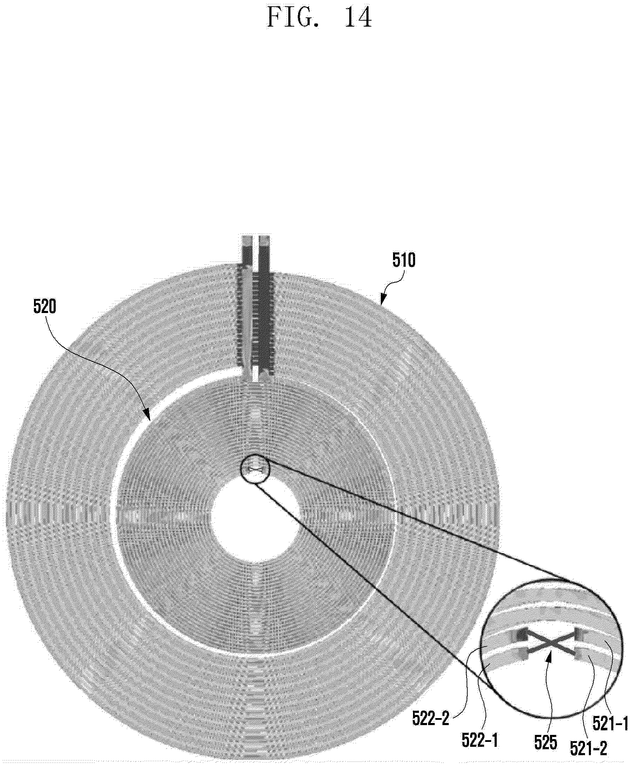

FIG. 14 is a schematic diagram illustrating a current distribution of a second coil according to an embodiment of the disclosure.

According to an embodiment, in case that, in the intersection region 525 described above with reference to FIG. 12 or FIG. 13, the first wire 521-1 (e.g., the first sub-line 521-1) of the 2-1st winding 521 disposed in the first layer 531 and the first wire 522-1 (e.g., the first sub-line 522-1) of the 2-2nd winding 522 disposed in the second layer 532 are connected, and the second wire 521-2 (e.g., the second sub-line 521-2) of the 2-1st winding 521 disposed in the first layer 531 and the second wire 522-2 (e.g., the second sub-line 522-2) of the 2-2nd winding 522 disposed in the second layer 532 are connected, since the length of a wire where the first wire 521-1 (e.g., the first sub-line) in the first layer 531 and the first wire 522-1 (e.g., the first sub-line) in the second layer 532 are connected is substantially identical to the length of a wire where the second wire 521-2 (e.g., the second sub-line) in the first layer 531 and the second wire 522-2 (e.g., the second sub-line) in the second layer 532 are connected, it may be identified that a uniform current density is distributed in the second coil 520.

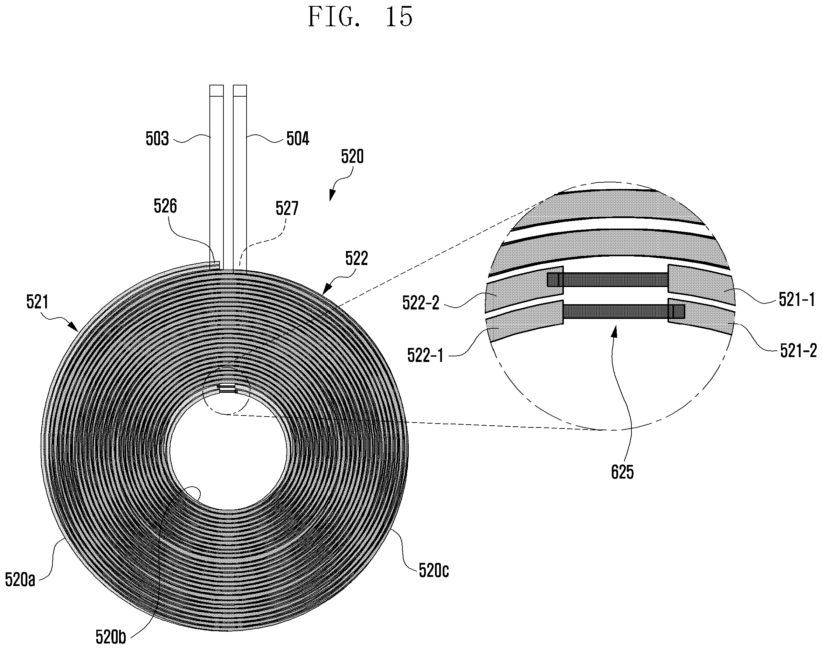

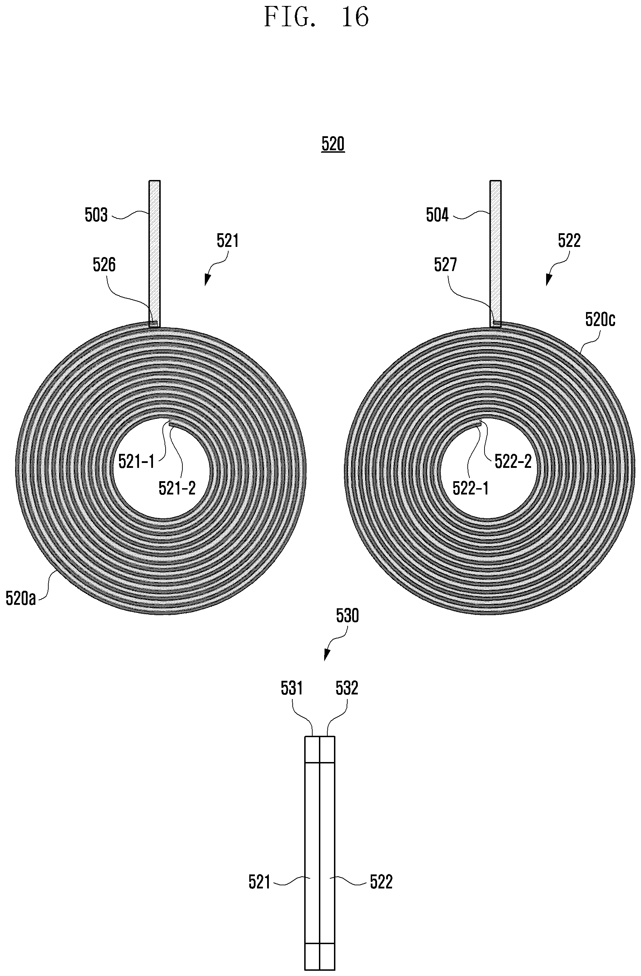

FIG. 15 is a schematic diagram illustrating a configuration of a second coil according to various embodiments of the disclosure. FIG. 16 is a schematic diagram illustrating a 2-1st winding of a second coil disposed in a first layer of a circuit board and a 2-2nd winding of the second coil disposed in a second layer of the circuit board according to various embodiments of the disclosure.

In the following description, components that are substantially the same as those described in the embodiments of FIGS. 5 to 11 above are assigned the same reference numerals, and redundant descriptions may be omitted.

Referring to FIGS. 5, 15, and 16, the multiple second windings of the second coil 520 may include the 2-1st winding 521 and the 2-2nd winding 522. For example, the 2-1st winding 521 of the second coil 520 may be disposed in a first layer 531 of the circuit board 530. For example, the 2-2nd winding 522 of the second coil 520 may be layer 532 of the circuit board 530. For example, the first layer 531 on which the 2-1st winding 521 is disposed and the second layer 532 on which the 2-2nd winding 522 is disposed may overlap each other.

According to various embodiments, the 2-1st winding 521 disposed in the first layer 531 and the 2-2nd winding 522 disposed in the second layer 532 may have an asymmetric shape with respect to each other when the first layer 531 and the second layer 532 overlap each other. For example, the 2-1st winding 521 and the 2-2nd winding 522 may have an asymmetric shape with respect to a virtual center line between the first layer 531 and the second layer 532.

According to an embodiment, among the multiple second windings of the second coil 520, the 2-1st winding 521 disposed in the first layer 531 of the circuit board 530 may include a first wire 521-1 (e.g., a first sub-line 521-1) and a second wire 521-2 (e.g., a second sub-line 521-2). For example, the first wire 521-1 (e.g., the first sub-line) may be disposed at the outer side of the second wire 521-2 (e.g., the second sub-line) in the first layer 531.

According to an embodiment, the number of turns of the first wire 521-1 (e.g., the first sub-line or outer wire) and the second wire 521-2 (e.g., the second sub-line or inner wire) of the 2-1st winding 521 may be different. For example, in the 2-1 winding 521, the number of turns of the first wire 521-1 (e.g., the first sub-line or outer wire) may be 13 turns, and the number of turns of the second wire 521-2 (e.g., the second sub-line or inner wire) may be 14 turns. For example, in the 2-1 winding 521, the number of turns of the first wire 521-1 (e.g., the first sub-line or outer wire) may be 14 turns, and the number of turns of the second wire 521-2 (e.g., the second sub-line or inner wire) may be 13 turns.

According to an embodiment, among the multiple second windings of the second coil 520, the 2-2nd winding 522 disposed in the second layer 532 of the circuit board 530 may include the first wire 522-1 (e.g., the first sub-line) and the second wire 522-2 (e.g., a second sub-line). For example, the first wire 522-1 (e.g., the first sub-line) may be disposed at the inner side of the second wire 522-2 (e.g., the second sub-line) in the second layer 532.

According to an embodiment, the number of turns of the first wire 522-1 (e.g., the first sub-line or inner wire) and the second wire 522-2 (e.g., the second sub-line or inner wire) of the 2-2nd winding 522 may be substantially the same. For example, in the 2-2nd winding 522, the number of turns of the first wire 522-1 (e.g., the first sub-line or inner wire) may be 13 turns, and the number of turns of the second wire 522-2 (e.g., the second sub-line or outer wire) may be 13 turns. For example, in the 2-2nd winding 522, the number of turns of the first wire 522-1 (e.g., the first sub-line or inner wire) may be 14 turns, and the number of turns of the second wire 522-2 (e.g., the second sub-line or outer wire) may be 14 turns. For example, in case that the number of turns of the first wire 522-1 (e.g., the first sub-line or inner wire) and the second wire 522-2 (e.g., the second sub-line or outer wire) of the 2-2nd winding 522 is the same (e.g., 13 turns or 14 turns), the second wire 522-2 (e.g., the second sub-line or outer wire) may be formed to have a greater length than the first wire 522-1 (e.g., the first sub-line or inner wire). According to various embodiments, the above-described number of wraps (e.g., turns) of the 2-1st winding 521 and the 2-2nd winding 522 is an example, and various other numbers of wraps (e.g., turns) may be applied.

According to an embodiment, the innermost winding 520b of the multiple second windings (e.g., the 2-1st winding 521 and the 2-2nd winding 522) of the second coil 520 may have at least one connection region 625 (e.g., a connection point) positioned thereon. For example, in the connection region 625, the first wire 521-1 (e.g., the first sub-line or outer wire) of the 2-1st winding 521 disposed in the first layer 531 and the second wire 522-2 (e.g., the second sub-line or outer wire) of the 2-2nd winding 522 disposed in the second layer 532 may be connected. For example, in the connection region 625, the second wire 521-2 (e.g., the second sub-line or inner wire) of the 2-1st winding 521 disposed in the first layer 531 and the first wire 522-1 (e.g., the second sub-line or inner wire) of the 2-2nd winding 522 disposed in the second layer 532 may be connected. For example, in case that, in the connection region 625, the first wire 521-1 (e.g., the first sub-line or outer wire) of the 2-1st winding 521 disposed in the first layer 531 and the second wire 522-2 (e.g., the second sub-line or outer wire) of the 2-2nd winding 522 disposed in the second layer 532 are connected, and the second wire 521-2 (e.g., the second sub-line or inner wire) of the 2-1st winding 521 disposed in the first layer 531 and the first wire 522-1 (e.g., the first sub-line or inner wire) of the 2-2nd winding 522 disposed in the second layer 532 are connected, the lengths of the inner and outer wires of the second coil 520 may be formed to be substantially identical. For example, in case that the inner wire and the outer wire of the second coil 520 are formed to have substantially the same length, and a current flows through the second coil 520, no impedance difference may occur between the inner and outer wires, and a uniform current density may be formed and distributed in the second coil 520.

According to an embodiment, the start point 526 (e.g., the first end portion) of the second coil 520 may be positioned at the outermost winding 520a of the 2-1st winding 521 disposed in the first layer 531 among the multiple second windings. For example, the start point 526 (e.g., the first end portion) of the second coil 520 may be positioned at the outermost winding 520a among the multiple second windings on the first layer 531.

According to an embodiment, the end point 527 (e.g., the second end portion) of the second coil 520 may be positioned at the outermost winding 520c of the 2-2nd winding 522 disposed in the second layer 532 among the multiple second windings. For example, the end point 527 (e.g., the second end portion) of the second coil 520 may be positioned at the outermost winding 520c among the multiple second windings on the second layer 532.

According to an embodiment, the start point 526 (e.g., the first end portion) of the second coil 520 may be electrically connected to a third feed terminal 503. The end point 527 (e.g., the second end portion) of the second coil 520 may be electrically connected to a fourth feed terminal 504. For example, the third feed terminal 503 may be electrically connected to the first feed terminal 501 shown in FIG. 5. For example, the fourth feed terminal 504 may be electrically connected to the second feed terminal 502 shown in FIG. 5.

According to various embodiments, the third feed terminal 503 connected to the start point 526 of the second coil 520 and the fourth feed terminal 504 connected to the end point 527 may be omitted. For example, in case that the third feed terminal 503 and the fourth feed terminal 504 of the second coil 520 are omitted, the first feed terminal 501 and the second feed terminal 502 shown in FIG. 5 may be used in common. For example, in case that the third feed terminal 503 and the fourth feed terminal 504 of the second coil 520 are omitted, the start point 526 of the second coil 520 may be electrically connected to the first feed terminal 501 of the first coil 510 shown in FIG. 5. For example, the end point 527 of the second coil 520 may be electrically connected to the second feed terminal 502 of the first coil 510 shown in FIG. 5. For example, the first feed terminal 501 and the second feed terminal 502 may be disposed on the same layer and/or different layers of the circuit board 530. For example, the first feed terminal 501, the second feed terminal 502, the third feed terminal 503, and the fourth feed terminal 504 may be disposed on the same layer and/or different layers of the circuit board 530.

According to an embodiment, among the multiple second windings of the second coil 520, the 2-1st winding 521 disposed in the first layer 531 of the circuit board 530 may be configured in a form in which the first wire 521-1 (e.g., the first sub-line or outer wire) and the second wire 521-2 (e.g., the second sub-line or inner wire) are wound in a spiral shape. For example, the 2-1st winding 521 of the second coil 520 may include a form in which the first wire 521-1 (e.g., the first sub-line or outer wire) and the second wire 521-2 (e.g., the second sub-line or inner wire) are wound multiple turns (e.g., multiple times) in the first direction (e.g., the counterclockwise direction), with reference to the start point 526 of the outermost winding 520a of the 2-1st winding 521.

According to an embodiment, the number of turns of the first wire 521-1 (e.g., the first sub-line or outer wire) and the second wire 521-2 (e.g., the second sub-line or inner wire) of the 2-1st winding 521 may be different. For example, in the 2-1 winding 521, the number of turns of the first wire 521-1 (e.g., the first sub-line or outer wire) may be 13 turns, and the number of turns of the second wire 521-2 (e.g., the second sub-line or inner wire) may be 14 turns. For example, in the 2-1 winding 521, the number of turns of the first wire 521-1 (e.g., the first sub-line or outer wire) may be 14 turns, and the number of turns of the second wire 521-2 (e.g., the second sub-line or inner wire) may be 13 turns.

According to an embodiment, among the multiple second windings of the second coil 520, the 2-2nd winding 522 disposed in the second layer 532 of the circuit board 530 may be configured in a form in which the first wire 522-1 (e.g., the first sub-line or inner wire) and the second wire 522-2 (e.g., the second sub-line or outer wire) are wound in a spiral shape. For example, the 2-2nd winding 522 of the second coil 520 may include a form in which the first wire 522-1 (e.g., the first sub-line or inner wire) and the second wire 522-2 (e.g., the second sub-line or outer wire) are wound multiple turns (e.g., multiple times) in the second direction (e.g., the clockwise direction), with reference to the end point 527 of the outermost winding 520c of the 2-2nd winding 521.

According to an embodiment, the number of turns of the first wire 522-1 (e.g., the first sub-line or inner wire) and the second wire 522-2 (e.g., the second sub-line or outer wire) of the 2-2nd winding 522 may be substantially the same. For example, in the 2-2nd winding 522, the number of turns of the first wire 522-1 (e.g., the first sub-line or inner wire) may be 13 turns, and the number of turns of the second wire 522-2 (e.g., the second sub-line or outer wire) may be 13 turns. For example, in the 2-2nd winding 522, the number of turns of the first wire 522-1 (e.g., the first sub-line or inner wire) may be 14 turns, and the number of turns of the second wire 522-2 (e.g., the second sub-line or outer wire) may be 14 turns.

According to various embodiments, the above-described number of wraps (e.g., turns) of the 2-1st winding 521 and the 2-2nd winding 522 is an example, and various other numbers of wraps (e.g., turns) may be applied.

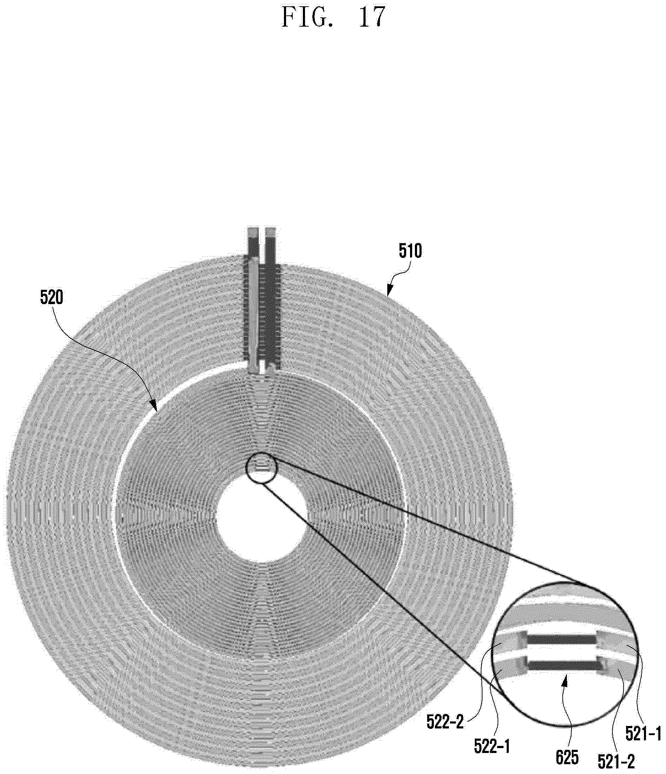

FIG. 17 is a schematic diagram illustrating a current distribution of a second coil according to various embodiments of the disclosure.

According to various embodiments, in case that, in the connection region 625 (e.g., the connection point) described above, the first wire 521-1 (e.g., the first sub-line or outer wire) of the 2-1st winding 521 disposed in the first layer 531 and the second wire 522-2 (e.g., the second sub-line or outer wire) of the 2-2nd winding 522 disposed in the second layer 532 are connected, and the second wire 521-2 (e.g., the second sub-line or inner wire) of the 2-1st winding 521 disposed in the first layer 531 and the first wire 522-1 (e.g., the first sub-line or inner wire) of the 2-2nd winding 522 disposed in the second layer 532 are connected, since the length of a wire where the first wire 521-1 (e.g., the first sub-line or outer wire) in the first layer 531 and the second wire 522-2 (e.g., the second sub-line or outer wire) in the second layer 532 are connected is substantially identical to the length of a wire where the second wire 521-2 (e.g., the second sub-line or inner wire) in the first layer 531 and the first wire 522-1 (e.g., the first sub-line or inner wire) in the second layer 532 are connected, it may be identified that a uniform current density is distributed in the second coil 520.

An electronic device 101, 300, 400, or 500 according to an embodiment of the disclosure may include a circuit board 530 and a first coil 510 and a second coil 520 disposed on the circuit board 530. According to an embodiment, the first coil 510 may include multiple first windings. According to an embodiment, the second coil 520 may include multiple second windings that are substantially surrounded by an innermost winding 516 of the multiple first windings of the first coil 510 and configured to provide power to an external electronic device 102 or 104. According to an embodiment, the inductance of the second coil 520 may be greater than the inductance of the first coil 510.

According to an embodiment, the multiple second windings of the second coil 520 may be disposed in a first layer 531 and a second layer 532 of the circuit board 530, which overlap each other, each of the multiple second windings may include a first sub-line 521-1 or 522-1 and a second sub-line 521-2 or 522-2, and the first sub-line 521-1 in the first layer 531 may be disposed at the outer side of the second sub-line 521-2.

According to an embodiment, the second number of the multiple windings of the second coil 520 may be configured to be greater than the first number of the multiple first windings of the first coil 510.

According to an embodiment, the inductance of the second coil 520 may be 1.5 to 2 times the inductance of the first coil 510.

According to an embodiment, the start point 511 of the first coil 510 may be positioned at the outermost winding 515 among the multiple first windings, the end point 512 of the first coil 510 may be positioned at the innermost winding 516 among the multiple first windings, the start point 511 of the first coil 510 may be connected to the first feed terminal 501, and the end point 512 of the first coil 510 may be connected to the second feed terminal 502.

According to an embodiment, in the second layer 532, the first sub-line 522-1 may be disposed at the inner side of the second sub-line 522-2.

According to an embodiment, at least one intersection region 525 may be positioned at the innermost winding 520b of the multiple second windings of the second coil 520, and in the intersection region 525, the first sub-line 521-1 in the first layer 531 and the first sub-line 522-1 in the second layer 532 may be connected, and the second sub-line 521-2 in the first layer 531 and the second sub-line 522-2 in the second layer 532 may be connected.

According to an embodiment, the start point 526 of the second coil 520 may be positioned at the outermost winding 520a of the multiple second windings in the first layer 531, and the end point 527 of the second coil 520 may be positioned at the outermost winding 520c of the multiple second windings in the second layer 532.

According to an embodiment, the multiple second windings of the second coil 520 may include a 2-1st winding 521 disposed in the first layer 531 and a 2-2nd winding 522 disposed in the second layer 532.

According to an embodiment, the 2-1st winding 521 disposed in the first layer 531 and the 2-2nd winding 522 disposed in the second layer 532 may be configured to have symmetrical shapes with respect to each other when the first layer 531 and the second layer 532 overlap.

According to an embodiment, the second 2-1 winding 521 disposed in the first layer 531 and the second 2-2 winding 522 disposed in the second layer 532 may be configured to have an asymmetrical shape when the first layer 531 and the second layer 532 overlap.

According to an embodiment, the length of the wire the first sub-line 521-1 in the first layer 531 and the first sub-line 522-1 in the second layer 532 are connected may be substantially identical to the length of the wire where the second sub-line 521-2 in the first layer 531 and the second sub-line 522-2 in the second layer 532 are connected.

According to an embodiment, in case that a current flows through the second coil 520, the current density of the wire where the first sub-line 521-1 in the first layer 531 and the first sub-line 522-1 in the second layer 532 are connected may be configured to be substantially the same as the current density of the wire where the second sub-line 521-2 in the first layer 531 and the second sub-line 522-2 in the second layer 532 are connected.

According to an embodiment, the first sub-line 521-1 in the first layer 531 and the first sub-line 522-1 in the second layer 532 may be connected through a first via configured in the circuit board 530, and the second sub-line 521-2 in the first layer 531 and the second sub-line 522-2 in the second layer 532 may be connected through a second via configured in the circuit board 530.

According to an embodiment, at least one connection region 625 may be positioned at the innermost winding 520b of the multiple second windings of the second coil 520, and in the connection region 625, the first sub-line 521-1 in the first layer 531 and the second sub-line 522-2 in the second layer 532 may be connected, and the second sub-line 521-2 in the first layer 531 and the first sub-line 522-1 in the second layer 532 may be connected.

An electronic device 101, 300, 400, or 500 according to an embodiment of the disclosure may include a circuit board 530, a first coil 510 including multiple windings disposed on the circuit board 530, and a second coil 520 which is substantially surrounded by the innermost winding 516 of the first coil 510 disposed on the circuit board 530 and includes a 2-1st winding 521 disposed in a first layer 531 of the circuit board 530 and a 2-2nd winding 522 disposed in a second layer 532 of the circuit board 530, which overlaps the first layer 531. According to an embodiment, the 2-1st winding 521 may include a first sub-line 521-1 and a second sub-line 521-2, wherein the first sub-line 521-1 of the 2-1st winding 521 may be disposed on the outer side of the second sub-line 521-2. According to an embodiment, the 2-2nd winding 522 may include a first sub-line 522-1 and a second sub-line 522-2, wherein the first sub-line 522-1 of the 2-2nd winding 522 may be disposed at the inner side of the second sub-line 522-2. According to an embodiment, at least one intersection region 525 may be positioned at the innermost coil 520b of the 2-1st coil 521 and the 2-2nd coil 522. According to an embodiment, in the intersection region 525, the first sub-line 521-1 of the 2-1st winding 521 and the first sub-line 522-1 of the 2-2nd winding 522 may be connected, and the second sub-line 521-2 of the 2-1st winding 521 and the second sub-line 522-2 of the 2-2nd winding 522 may be connected.

According to an embodiment, the inductance of the second coil 520 may be greater than the inductance of the first coil 510.

According to an embodiment, the start point 526 of the second coil 520 may be positioned at the outermost winding 520a of the 2-1st winding 521 in the first layer 531, and the end point 527 of the second coil 520 may be positioned at the outermost winding 520c of the 2-2nd winding 522 in the second layer 532.

According to an embodiment, the 2-1st winding 521 disposed in the first layer 531 and the 2-2nd winding 522 disposed in the second layer 532 may be configured to have symmetrical shapes with respect to each other when the first layer 531 and the second layer 532 overlap.

According to an embodiment, the length of the wire where the first sub-line 521-1 of the 2-1st winding 521 and the first sub-line 522-1 of the 2-2nd winding 522 are connected may be configured to be substantially identical to the length of the wire where the second sub-line 521-2 of the 2-1st winding 521 and the second sub-line 522-2 of the 2-2nd winding 522 are connected.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Although the disclosure has been described with reference to various embodiments thereof, it will be apparent to those of ordinary skill in the art to which the disclosure pertains that various changes and modifications may be made without departing from the technical spirit of the disclosure, and such changes and modifications shall be construed as falling within the scope of the disclosure.

## Claims

1. An electronic device (101, 300, 400, 500) comprising:
a circuit board (530); and
a first coil (510) and a second coil (520) disposed on the circuit board (530),
wherein the first coil (510) comprises multiple first windings,
wherein the second coil (520) comprises multiple second windings which are substantially surrounded by an innermost winding (516) among the multiple first windings of the first coil (510) and configured to provide power to an external electronic device (102, 104), and
wherein an inductance of the second coil (520) is greater than an inductance of the first coil (510).

2. The electronic device of claim 1, wherein the multiple second windings of the second coil (520) are disposed in a first layer (531) and a second layer (532) of the circuit board (530), the first layer and the second layer overlapping each other,
wherein each winding of the multiple second windings comprises a first sub-line (521-1, 522-1) and a second sub-line (521-2, 522-2), and
wherein, in the second layer 531, the first sub-line (521-1) is disposed outside the second sub-line (521-2).

3. The electronic device of claim 1, wherein a second number of the multiple second windings of the second coil (520) is greater than a first number of the multiple first windings of the first coil (510).

4. The electronic device of claim 1, wherein the inductance of the second coil (520) is 1.5 to 2 times the inductance of the first coil (510).

5. The electronic device of claim 1, wherein a start point (511) of the first coil (510) is positioned at an outermost winding (515) among the multiple first windings,
wherein an end point (512) of the first coil (510) is positioned at an innermost winding (516) among the multiple first windings, and
wherein the start point (511) of the first coil (510) is connected to a first feed terminal (501), and the end point (512) of the first coil (510) is connected to a second feed terminal (502).

6. The electronic device of claim 2, wherein, in the second layer (532), the first sub-line (522-1) is disposed inside the second sub-line (522-2).

7. The electronic device of claim 6, wherein at least one intersection region (525) is positioned at an innermost winding (520b) among the multiple second windings of the second coil (520), and
wherein, in the intersection region (525), the first sub-line (521-1) in the first layer (531) is connected to the first sub-line (522-1) in the second layer (532), and the second sub-line (521-2) in the first layer (531) is connected to the second sub-line (522-2) in the second layer (532).

8. The electronic device of claim 7, wherein a start point (526) of the second coil (520) is positioned at an outermost winding (520a) among the multiple second windings in the first layer (531), and
wherein an end point (527) of the second coil (520) is positioned at an outermost winding (520c) among the multiple second windings in the second layer (532).

9. The electronic device of claim 6, wherein the multiple second windings of the second coil (520) comprise a 2-1st winding (521) disposed in the first layer (531) and a 2-2nd winding (522) disposed in the second layer (532).

10. The electronic device of claim 9, wherein the 2-1st winding (521) disposed in the first layer (531) and the 2-2nd winding (522) disposed in the second layer (532) are configured to have a symmetrical shape with respect to each other when the first layer (531) and the second layer (532) overlap.

11. The electronic device of claim 9, wherein the 2-1st winding (521) disposed in the first layer (531) and the 2-2nd winding (522) disposed in the second layer (532) are configured to have an asymmetrical shape with respect to each other when the first layer (531) and the second layer (532) overlap.

12. The electronic device of claim 7, wherein a length of a wire where connecting the first sub-line (521-1) in the first layer (531) and the first sub-line (522-1) in the second layer (532) are connected is substantially identical to a length of a wire where the second sub-line (521-2) in the first layer (531) and the second sub-line (522-2) in the second layer (532) are connected.

13. The electronic device of claim 7 or 12, wherein, in case that a current flows through the second coil (520), a current density of the wire where the first sub-line (521-1) in the first layer (531) and the first sub-line (522-1) in the second layer (532) are connected is configured to be substantially identical to a current density of the wire where the second sub-line (521-2) in the first layer (531) and the second sub-line (522-2) in the second layer (532) are connected.

14. The electronic device of claim 7, wherein the first sub-line (521-1) in the first layer (531) and the first sub-line (522-1) in the second layer (532) are connected through a first via disposed in the circuit board (530), and
wherein the second sub-line (521-2) in the first layer (531) and the second sub-line (522-2) in the second layer (532) are connected through a second via disposed in the circuit board (530).

15. The electronic device of claim 6, wherein at least one connection region (625) is positioned at the innermost winding (520b) among the multiple second windings of the second coil (520), and
wherein, in the connection region (625), the first sub-line (521-1) in the first layer (531) and the second sub-line (522-2) in the second layer (532) are connected, and the second sub-line (521-2) in the first layer (531) and the first sub-line (522-1) in the second layer (532) are connected.
